# EUROPÄISCHE PATENTANMELDUNG

(11) **EP 3 828 313 A1**
(43) Veröffentlichungstag der Anmeldung: **02.06.2021**
(21) Anmeldenummer: 19212114.3
(22) Anmeldetag: 28.11.2019
(51) Int. Cl.: C25B 1/08, C25B 1/10, C25B 9/20, C25B 13/00, C25B 15/02, C25B 1/12

(54) **ELEKTROLYSESYSTEM ZUM ZERLEGEN VON WASSER ZU WASSERSTOFF UND SAUERSTOFF UND EIN VERFAHREN ZUM BETREIBEN DES ELEKTROLYSESYSTEMS**

(71) Anmelder: Siemens Energy Global GmbH & Co. KG, 81739 München (DE)
(72) Erfinder: Schacherer, Christian, 92364 Deining (DE); Wolf, Erik, 91341 Röttenbach (DE)

(57) **Zusammenfassung**

Die Erfindung betrifft ein Elektrolysesystem zum Zerlegen von Wasser zu Wasserstoff und Sauerstoff mit wenigstens zwei Elektrolysemodulen, wobei jedes Elektrolysemodul wenigstens zwei Elektrolysezellen umfasst, wobei eine Elektrolysezelle einen Anodenraum und einen Kathodenraum umfasst und der Anodenraum von dem Kathodenraum durch eine Protonenaustauschmembran getrennt wird, wobei zu wenigstens einem Elektrolysemodul elektrisch parallel eine gleichstromfähige Schaltvorrichtung angeordnet ist. Das Elektrolysesystem wird mit den wenigstens zwei Elektrolysemodulen betrieben. Bei Absinken der zur Verfügung stehenden elektrischen Leistung wird wenigstens eine Schaltvorrichtung geschlossen. Wenigstens ein Elektrolysemodul wird durch die Schaltvorrichtung überbrückt. Es werden nun Elektrolysemodule um die Anzahl an überbrückten Elektrolysemodulen verringert betrieben. Bei Anstieg der zur Verfügung stehenden elektrischen Leistung wird wenigstens eine Schaltvorrichtung geöffnet. Es werden wenigstens zwei Elektrolysemodule betrieben.

## Beschreibung

Die Erfindung betrifft ein Elektrolysesystem zum Zerlegen von Wasser zu Wasserstoff und Sauerstoff und ein Verfahren zum Betreiben des Elektrolysesystem.

Ein Elektrolyseur ist eine Vorrichtung, die mit Hilfe von elektrischem Strom eine Stoffumwandlung herbeiführt (Elektrolyse). Entsprechend der Vielfalt an unterschiedlichen Elektrolysen gibt es auch eine Vielzahl von Elektrolyseuren, wie beispielsweise einen Elektrolyseur für eine Wasserstoffelektrolyse.

Aktuelle Überlegungen gehen dahin, mit Energie aus erneuerbaren Energiequellen in Zeiten mit viel Sonne und viel Wind, also mit überdurchschnittlicher Solarstrom- oder Windkrafterzeugung, Wertstoffe zu erzeugen. Ein Wertstoff kann insbesondere Wasserstoff sein, welcher mit Wasserelektrolyseuren erzeugt wird. Mittels des Wasserstoffs kann beispielsweise sogenanntes EE-Gas hergestellt werden.

Dabei erzeugt ein (Wasserstoffelektrolyse-) Elektrolyseur mit Hilfe der elektrischen Energie, insbesondere aus Windenergie oder Sonnenenergie, zunächst Wasserstoff. Danach wird der Wasserstoff in einem Sabatierprozess zusammen mit Kohlendioxid zur Herstellung von Methan verwendet. Das Methan kann dann beispielsweise in ein bereits vorhandenes Erdgasnetz eingespeist werden und ermöglicht so eine Speicherung und einen Transport von Energie zum Verbraucher und kann so ein elektrisches Netz entlasten. Alternativ dazu kann der vom Elektrolyseur erzeugte Wasserstoff auch unmittelbar weiterverwendet werden, beispielsweise für eine Brennstoffzelle. Bei einem Elektrolyseur für die Wasserstoffelektrolyse wird Wasser in Wasserstoff und Sauerstoff zerlegt. Bei einem PEM-Elektrolyseur wird typischerweise anodenseitig destilliertes Wasser als Edukt zugeführt und an einer protonendurchlässigen Membran (engl.: "Proton-Exchange-Membrane"; PEM) zu Wasserstoff und Sauerstoff gespalten. Das Wasser wird dabei an der Anode zu Sauerstoff oxidiert. Die Protonen passieren die protonendurchlässige Membran. Kathodenseitig wird Wasserstoff produziert. Eine Elektrolyseeinheit umfasst typischerweise wenigstens vier Elektrolysemodule. Ein Elektrolysemodul umfasst typischerweise 50 Elektrolysezellen.

Die Energie aus erneuerbaren Energien steht in Abhängigkeit der Wetterbedingungen nicht konstant zur Verfügung. PEM-Elektrolyseure können bei einer geringeren für die Elektrolyse zur Verfügung stehenden elektrischen Leistung in Teillast betreiben werden. Dies führt allerdings nachteilig dazu, dass die Betriebstemperatur des PEM-Elektrolyseurs sinkt. Weiterhin erhöht der Teillastbetrieb der Elektrolysezellen die Alterung der Elektrolysezellen, was nachteilig eine häufigere Wartung der Elektrolysezellen zur Folge hat. Aufgrund des Teillastbetriebs der Elektrolysezellen kann sich nachteilig auch die Zusammensetzung der Produktgase aus der Elektrolyse ändern.

Es ist daher Aufgabe der Erfindung ein Elektrolysesystem und ein Verfahren zum Betreiben eines Elektrolysesystems anzugeben, welches bei Teillast betrieben werden kann und dabei die oben genannten Nachteile überwindet.

Die Erfindung wird mit einem Elektrolysesystem gemäß Anspruch 1 und einem Verfahren gemäß Anspruch 9 gelöst.

Das erfindungsgemäße Elektrolysesystem zum Zerlegen von Wasser zu Wasserstoff und Sauerstoff umfasst wenigstens zwei Elektrolysemodule. Jedes Elektrolysemodul umfasst wenigstens zwei Elektrolysezellen. Eine Elektrolysezelle umfasst einen Anodenraum und einen Kathodenraum, wobei der Anodenraum von dem Kathodenraum durch eine Protonenaustauschmembran getrennt ist. Zu wenigstens einem Elektrolysemodul ist eine gleichstromfähige Schaltvorrichtung elektrisch parallelgeschaltet.

Das erfindungsgemäße Verfahren zum Betreiben eines Elektrolysesystems zum Zerlegen von Wasser zu Wasserstoff und Sauerstoff umfasst mehrere Schritte. Zunächst erfolgt das Bereitstellen von wenigstens zwei Elektrolysemodulen, wobei jedes Elektrolysemodul wenigstens zwei Elektrolysezellen umfasst. Eine Elektrolysezelle umfasst einen Anodenraum und einen Kathodenraum. Der Anodenraum ist von dem Kathodenraum durch eine Protonenaustauschmembran getrennt. Eine gleichstromfähige Schaltvorrichtung ist zu wenigstens einem Elektrolysemodul elektrisch parallel angeordnet. Die wenigstens zwei Elektrolysemodule werden mittels elektrischen Stroms betrieben. Bei Absinken einer für die Elektrolyse zur Verfügung stehenden elektrischen Leistung wird wenigstens eine Schaltvorrichtung geschlossen. Das wenigstens eine Elektrolysemodul wird durch die wenigstens eine Schaltvorrichtung überbrückt. Anschließend wird das Elektrolysesystem betrieben, wobei die Anzahl an betriebenen Elektrolysemodulen um die Anzahl an überbrückten Elektrolysemodulen verringert ist. Beim Anstieg der für die Elektrolyse zur Verfügung stehenden elektrischen Leistung wird wenigstens eine Schaltvorrichtung wiederum geöffnet. Es werden die wenigstens zwei Elektrolysemodule betrieben.

Vorteilhaft ist es durch das Überbrücken von wenigstens einem Elektrolysemodul möglich, das Elektrolysesystem in Teillast zu betreiben, ohne dass einzelne Elektrolysemodule in Teillast betrieben werden. Die Stromdichte über die verbleibenden Elektrolysemodule, die betrieben werden, bleibt hoch, so dass ein Betrieb dieser einzelnen Elektrolysemodule in Teillast, also bei geringer Stromdichte, verhindert wird. Vorteilhaft wird mithilfe dieses Elektrolysesystems eine vorschnelle Alterung der Elektrolysezellen in den einzelnen Elektrolysemodulen aufgrund von Teillastbetrieb verhindert. Die Elektrolysemodule, die weiterhin betrieben werden, verhindern vorteilhaft ein Auskühlen des gesamten Elektrolysesystems. Auch die Produktgasqualität bleibt vorteilhaft konstant, da ein einzelnes Elektrolysemodul bei gleichbleibender Stromdichte und somit bei konstanter Wasserstofferzeugungsrate betrieben werden kann.

In einer vorteilhaften Ausgestaltung und Weiterbildung der Erfindung sind die Elektrolysezellen elektrisch in Reihe geschaltet auch die Elektrolysemodule sind elektrisch in Reihe geschaltet. Die Elektrolysemodule können zu einem Stack zusammengefasst werden. Die Leistung eines solchen Stacks kann vorteilhaft durch Hintereinanderschalten der Elektrolysemodule nach Bedarf angepasst werden. Ein Stack umfasst insbesondere ein Elektrolysesystem mit einer Leistung im Bereich von 1 bis 50 MW.

In einer weiteren vorteilhaften Ausgestaltung und Weiterbildung der Erfindung ist zwischen zwei Elektrolysemodulen eine Druckplatte angeordnet. Die Druckplatte ist elektrisch leitend mit dem Elektrolysemodulen verbunden. Die einzelnen Elektrolysezellen werden miteinander verpresst. Das Zusammenpressen der einzelnen Membranlagen der einzelnen Elektrolysezellen erfolgt vorteilhaft mit Druckplatten. Es werden typischerweise von 50 bis zu 300 Protonenaustauschmembran-Lagen (PEM - Lagen) miteinander verpresst. Vorteilhaft können mittels der Druckplatten mehrere Elektrolysezellen zu einem Elektrolysemodul zusammengepresst werden. Mehrere Elektrolysemodule können wiederum durch Aneinanderreihen der Elektrolysemodule mit Druckplatten dazwischen zu einem Stack zusammengefasst werden. Vorteilhaft ermöglicht der Einsatz der Druckplatten somit eine flexible Anzahl von Elektrolysemodulen zu einem Elektrolysesystem zusammenzufassen.

In einer vorteilhaften Ausgestaltung und Weiterbildung der Erfindung ist die Schaltvorrichtung elektrisch leitend mit zwei Druckplatten, die wenigstens ein Elektrolysemodul begrenzen, verbunden. Vorteilhaft kann so über das Schließen der Schaltvorrichtung das wenigstens eine Elektrolysemodul überbrückt werden. Das Anschließen der Schaltervorrichtung lässt sich über das Anschließen an die Druckplatten einfach realisieren.

In einer weiteren vorteilhaften Ausgestaltung und Weiterbildung der Erfindung weist die Schaltvorrichtung in einem geschlossenen Zustand einen geringeren elektrischen Widerstand auf als das Elektrolysemodul. Somit fließt vorteilhaft Strom durch die geschlossene Schaltvorrichtung, sodass einzelne Elektrolysemodule in Zeiten, in denen wenig elektrischer Strom zur Verfügung steht, elektrisch überbrückt werden. Weiterhin ist eine niederinduktive Leistungsführung vorteilhaft für eine Kommutierung des elektrischen Stroms vom Schalter zurück in das Modul.

In einer weiteren vorteilhaften Ausgestaltung und Weiterbildung der Erfindung ist die Schaltvorrichtung als eine gekapselte Schaltvorrichtung ausgeführt. Als gekapselt wird hier eine Schaltvorrichtung verstanden, die von einer Hülle umgeben ist, welche Lichtbögen in einem isolierten Volumen umschließt. Besonders bevorzugt ist die Schaltvorrichtung eine Vakuumschaltröhre oder ein lebender Behälterunterbrecher (engl.: "Live Tank") oder toter Behälterunterbrecher (engl.: "Dead Tank"), wie sie in der Hochspannungstechnik eingesetzt werden. Vorteilhaft wird durch das Verwenden von gekapselten Schaltvorrichtung vermieden, dass Lichtbögen in einer explosionsgefährdeten Umgebung insbesondere umfassend Wasserstoff, ausgebildet werden. Somit erhöht der Einsatz der gekapselten Schaltvorrichtung die Sicherheit des Elektrolysesystems.

In einer weiteren vorteilhaften Ausgestaltung und Weiterbildung der Erfindung wird bei Öffnen der Schaltvorrichtung der Gleichstromfluss von der Schaltvorrichtung in das Elektrolysemodul kommutiert. Durch das Wechseln des Stromflusses wird vorteilhaft das Elektrolysemodul, welches zuvor überbrückt wurde, wieder in Betrieb genommen.

In einer weiteren vorteilhaften Ausgestaltung und Weiterbildung der Erfindung wird die Schaltvorrichtung beim Kommutieren mit einer Lichtbogenspannung von wenigstens 100 V, insbesondere von wenigstens 120 V betrieben. Vorteilhaft liegt der elektrische Strom in der Schaltvorrichtung oder in einem Elektrolysemodul in einem Bereich von 2 kA bis 10 kA. Vorteilhaft kann so der Strom eines Elektrolysemoduls umfassend bis zu 30 Elektrolysezellen, besonders bevorzugt bis zu 300 Elektrolysezellen, überbrückt werden.

In einer weiteren vorteilhaften Ausgestaltung und Weiterbildung der Erfindung werden mehrere Schaltstrecken zur Überbrückung eines Moduls in Reihe geschaltet. Die erhöht die Lichtbogenbrennspannung vorteilhaft. Dies schließt Konzepte mit Löschblechen zur Aufspaltung eines Lichtbogens zur Erhöhung der Lichtbogenbrennspannung ein. Ebenso weitere Verfahren, die eine Erhöhung der Lichtbogenbrennspannung zur Folge haben, wie insbesondere eine Beeinflussung durch Magnetfelder, mechanische Einschnürung des Lichtbogens, Verlängerung des Lichtbogens oder Kühlung des Lichtbogens.

In einer weiteren vorteilhaften Ausgestaltung und Weiterbildung der Erfindung wird eine niederohmiger Widerstand oder eine Diode in Vorwärtsrichtung in Reihe mit dem Schaltelement verschaltet. Vorteilhaft werden die Polarität und eine Schutzspannung für den Stack somit aufrechterhalten.

In einer weiteren vorteilhaften Ausgestaltung und Weiterbildung der Erfindung werden wenigstens zwei Elektrolysemodule mit einer Schaltvorrichtung, welche zu den Elektrolysemodulen parallel angeordnet ist, überbrückt. Sollen weitere Module überbrückt werden, werden zusätzlich vier Module überbrückt. Die vorteilhafte Systematik beim Überbrücken der Module ist die Binärreihe 2ⁿ (1 Modul, 2 Module, 4 Module, 8 Module etc.). Vorteilhaft kann so die Anzahl der Schaltvorrichtungen verringert werden.

Weitere Merkmale, Eigenschaften und Vorteile der vorliegenden Erfindung ergeben sich aus der nachfolgenden Beschreibung unter Bezugnahme auf die beiliegenden Figuren. Darin zeigen schematisch:
- Figur 1: Elektrolysesystem mit vier Elektrolysemodulen mit drei Schaltvorrichtungen in einer offenen Position;
- Figur 2: Elektrolysesystem mit vier Elektrolysemodulen mit zwei Schaltvorrichtungen, eine in einer geöffneten Position, eine in einer geschlossenen Position.

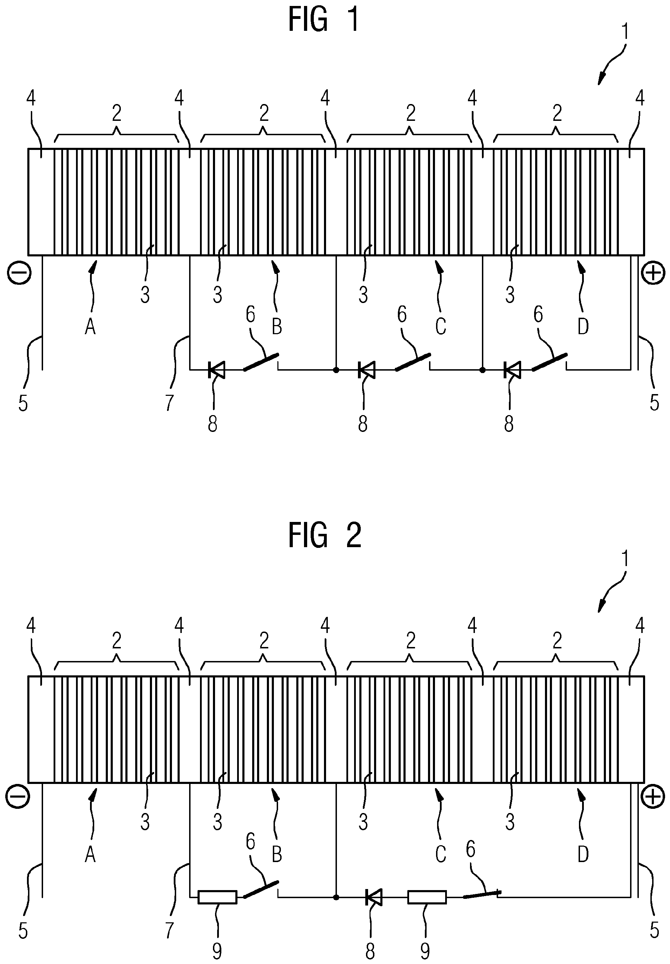

Figur 1 zeigt ein Elektrolysesystem 1 umfassend vier Elektrolysemodule 2. Jedes Elektrolysemodul 2 umfasst mehrere Elektrolysezellen 3. Die Elektrolysezellen 3 sind zwischen zwei Druckplatten 4 angeordnet. Die Druckplatten 4 pressen die Elektrolysezellen, welche insbesondere eine Protonenaustauschmembran umfassen, zusammen. Die Druckplatten 4, welche am Rand des Elektrolysesystems 1 angeordnet sind, sind über eine elektrischen Anschluss 5 elektrisch angeschlossen. Zu den Elektrolysemodulen B, C und D des Elektrolysesystems 1 sind parallel drei Schaltvorrichtungen 6 angeordnet. Die Schaltvorrichtungen 6 sind dabei elektrisch parallel zu den Elektrolysemodulen 2 angeordnet. In diesem Beispiel überbrückt jede Schaltvorrichtung 6 ein Elektrolysemodul 2. Somit ist jede Schaltvorrichtung 6 mit den Druckplatten 4 elektrisch verbunden, die ein Elektrolysemodul 2 begrenzen.

In diesem Beispiel erfolgt die Elektrolyse, insbesondere das Zerlegen von Wasser zu Wasserstoff und Sauerstoff, in allen Elektrolysemodulen 2, da alle Schaltvorrichtungen 6 geöffnet sind. Die Elektrolyse wird mit Gleichstrom durchgeführt. Somit sind die Schaltvorrichtungen 6 als Gleichstrom-Schaltvorrichtungen ausgebildet. Eine Diode 8 ist in Vorwärtsrichtung in Reihe mit dem Schaltelement verschaltet. Vorteilhaft werden die Polarität und eine Schutzspannung für den Stack somit aufrechterhalten.

Das Elektrolysesystem 1 wird in diesem Beispiel mit Volllast betrieben. Nimmt nun die elektrische Leistung im Netz, insbesondere aufgrund von wenig Wind und wenig Sonne, ab, so kann wenigstens eine Schaltvorrichtung 6 geschlossen werden. Somit können modular die Elektrolysemodule B, C und D abgeschalten, bzw. überbrückt, werden. In diesem Beispiel wird das Elektrolysemodul A bei Betrieb des Elektrolysesystems 1 immer betrieben. Werden nun in Abhängigkeit der zur Verfügung stehenden elektrischen Leistung die anderen Module abgeschalten, so kann das Elektrolysemodul A mit einer konstanten Leistungsdichte betrieben werden. Vorteilhaft werden somit keine Elektrolysemodule, bzw. Elektrolysezellen 3, in Teillast betrieben. Besonders vorteilhaft ist es, die Elektrolysemodule zeitlich nacheinander zu überbrücken. Insbesondere kann zunächst Modul A für eine festgesetzte Zeitdauer überbrückt werden. Im Anschluss kann Modul B oder Modul C für eine ähnliche Zeitdauer überbrückt werden. Somit werden die Module gleichmäßig betrieben und belastet. Durch das Überbrücken wird verhindert, dass die Elektrolysezellen 3 schnell altern. Weiterhin wird gewährleistet, dass die Produktgasqualität, insbesondere des Wasserstoffs, konstant bleibt.

In Figur 2 ist ebenfalls ein Elektrolysesystem 1 mit vier Elektrolysemodulen 2 gezeigt. Die Elektrolysemodule werden wiederum von Druckplatten 4 begrenzt, wobei die Druckplatten 4 die Elektrolysezellen 3 zusammenpressen. In diesem Beispiel sind zwei Schaltvorrichtungen 6 parallel zu den Elektrolysemodulen 2 angeordnet. Eine Schaltvorrichtung 6 ist parallel zu dem Elektrolysemodul B angeordnet. Eine weitere Schaltvorrichtung ist parallel zu den Elektrolysemodulen C und D angeordnet. Eine niederohmiger Widerstand 9 ist in Reihe mit dem Schaltelement verschaltet. Ein weitere niederohmiger Widerstand 9 ist in Reihe mit einer Diode 8 geschaltet. Es ist ebenso möglich, nur niederohmige Widerstände 9 ohne Diode 8 einzusetzen. Vorteilhaft werden die Polarität und eine Schutzspannung für den Stack mittels der Diode und/oder dem niederohmigen Widerstand aufrechterhalten.

Die Schaltvorrichtung 6, welche die Elektrolysemodule C und D überbrückt, ist in diesem Beispiel geschlossen. In diesem Beispiel wird also das Elektrolysesystem in Teillast betrieben. Dabei werden die Elektrolysemodule A und B jeweils bei konstanter elektrischer Leistung betrieben. Der Teillastbetrieb wird durch das Schließen der Schaltvorrichtung 6 ermöglicht, wodurch die Elektrolysemodule C und D elektrisch überbrückt werden. Steigt nun die verfügbare elektrische Leistung im Stromnetz wieder an, kann die Schaltvorrichtung 6 wiederum geöffnet werden. Besonders vorteilhaft ist die Schaltvorrichtung 6 als Vakuumröhre, insbesondere als Niederspannungsvakuumröhre, ausgebildet. Ebenfalls geeignet, aber nicht in der Zeichnung dargestellt, sind gekapselte Gasschaltstrecken analog zu einem lebenden Behälterunterbrecher (engl.: "Live Tank") oder toten Behälterunterbrecher (engl.: "Dead Tank"), wie sie in der Hochspannungstechnik eingesetzt werden. Somit wird verhindert, dass sich ein offener Lichtbogen beim Kommutieren des Stroms bildet. Dies ist wünschenswert, da in den Elektrolysemodulen explosionsgefährdete Gase, insbesondere Wasserstoff, entsteht.

In beiden Ausführungsbeispielen werden vier Elektrolysemodule 2 gezeigt. Dies ist eine vereinfachte Darstellung. Es ist ebenfalls im Sinne der Erfindung, dass eine größere Anzahl Elektrolysemodule in Reihe hintereinandergeschaltet werden. Ebenfalls ist es möglich, weitere gestaffelte Verschaltungen der Schaltanordnungen 6 anzuordnen, um einerseits eine ausreichende Menge an Schaltvorrichtungen 6 bereitzustellen und andererseits eine zu große Anzahl an Schaltvorrichtungen 6 zu verhindern.

Obwohl die Erfindung im Detail durch bevorzugte Ausführungsbeispiele näher illustriert und beschrieben wurde, ist die Erfindung nicht durch die offenbarten Beispiele eingeschränkt. Variationen hiervon können vom Fachmann abgeleitet werden, ohne den Schutzumfang der Erfindung, wie er durch die nachfolgenden Patentansprüche definiert wird, zu verlassen.

### Bezugszeichenliste

- 1: Elektrolysesystem
- 2: Elektrolysemodul
- 3: Elektrolysezelle
- 4: Druckplatte
- 5: elektrischer Anschluss
- 6: Schaltvorrichtung
- 7: elektrische Leitung
- 8: Diode
- 9: elektrischer Widerstand
- A: Elektrolysemodul A
- B: Elektrolysemodul B
- C: Elektrolysemodul C
- D: Elektrolysemodul D

## Patentansprüche

1. Elektrolysesystem (1) zum Zerlegen von Wasser zu Wasserstoff und Sauerstoff mit wenigstens zwei Elektrolysemodulen (2), wobei jedes Elektrolysemodul (2) wenigstens zwei Elektrolysezellen (3) umfasst, wobei eine Elektrolysezelle (3) einen Anodenraum und einen Kathodenraum umfasst und der Anodenraum von dem Kathodenraum durch eine Protonenaustauschmembran getrennt wird, wobei zu wenigstens einem Elektrolysemodul (2) elektrisch parallel wenigstens eine gleichstromfähige Schaltvorrichtung (6) angeordnet ist.

2. Elektrolysesystem (1) nach Anspruch 1, wobei die Elektrolysezellen (3) elektrisch in Reihe geschaltet angeordnet sind.

3. Elektrolysesystem (1) nach einem der vorhergehenden Ansprüche, wobei die Elektrolysemodule (2) elektrisch in Reihe geschaltet angeordnet sind.

4. Elektrolysesystem (1) nach einem der vorhergehenden Ansprüche, wobei zwischen zwei Elektrolysemodulen (2) eine Druckplatte (4) angeordnet ist und die Druckplatte (4) elektrisch leitend mit den Elektrolysemodulen (2) verbunden ist.

5. Elektrolysesystem (1) nach Anspruch 4, wobei die Schaltvorrichtung (6) elektrisch leitend mit zwei Druckplatten (4), die wenigstens ein Elektrolysemodul (2) begrenzen, verbunden ist.

6. Elektrolysesystem (1) nach einem der vorhergehenden Ansprüche, wobei die Schaltvorrichtung (6) in einem geschlossenen Zustand einen geringeren elektrischen Widerstand aufweist als das Elektrolysemodul (2).

7. Elektrolysesystem (1) nach einem der vorhergehenden Ansprüche, wobei die Schaltvorrichtung (6) eine gekapselte Schaltvorrichtung ist.

8. Elektrolysesystem (1) nach einem der vorhergehenden Ansprüche, wobei die Schaltvorrichtung (6) eine Vakuumschaltröhre ist.

9. Verfahren zum Betreiben eines Elektrolysesystems (1) zum Zerlegen von Wasser zu Wasserstoff und Sauerstoff mit mehreren Schritten:
- Bereitstellen von wenigstens zwei Elektrolysemodulen (2), wobei jedes Elektrolysemodul (2) wenigstens zwei Elektrolysezellen (3) umfasst, wobei eine Elektrolysezelle (3) einen Anodenraum und einen Kathodenraum umfasst und der Anodenraum von dem Kathodenraum durch eine Protonenaustauschmembran getrennt wird, wobei zu wenigstens einem Elektrolysemodul (2) elektrisch parallel wenigstens eine gleichstromfähige Schaltvorrichtung (6) angeordnet ist,
- Betreiben von wenigstens zwei Elektrolysemodulen (2),
- Schließen wenigstens einer Schaltvorrichtung (6) bei Absinken der zur Verfügung stehenden elektrischen Leistung und Überbrücken wenigstens eines Elektrolysemoduls (2) durch die Schaltvorrichtung (6),
- Betreiben einer um die Anzahl an überbrückten Elektrolysemodulen (2) verringerte Anzahl an Elektrolysemodulen (2),
- Öffnen wenigstens einer Schaltvorrichtung (6) bei Anstieg der zur Verfügung stehenden elektrischen Leistung,
- Betreiben von wenigstens zwei Elektrolysemodulen (2).

10. Verfahren nach Anspruch 9, wobei bei Öffnen der Schaltvorrichtung (6) Gleichstrom von der Schaltvorrichtung (6) in das Elektrolysemodul (2) kommutiert wird.

11. Verfahren nach Anspruch 10, wobei die Schaltvorrichtung (6) beim Kommutieren mit einer Lichtbogenspannung von wenigstens 100 V betrieben wird.

12. Verfahren nach einem der Ansprüche 9 bis 11, wobei der elektrische Strom in der Schaltvorrichtung (6) oder in einem Elektrolysemodul (2) in einem Bereich von 2 kA bis 10 kA liegt.

13. Verfahren nach einem der Ansprüche 9 bis 12, wobei wenigstens zwei Elektrolysemodule (2) mit einer Schaltvorrichtung (6) parallel überbrückt werden.
